# EUROPEAN PATENT APPLICATION

(11) **EP 3 086 420 A2**
(43) Date of publication of application: **26.10.2016**
(21) Application number: 16162159.4
(22) Date of filing: 24.03.2016
(51) Int. Cl.: H01S 3/067

(54) **SYSTEMS AND TECHNIQUES FOR TERMINATION OF PORTS IN FIBER LASERS**

(30) Priority: 26.03.2015 US 201514669760
(71) Applicant: OFS Fitel, LLC (a Delaware Limited Liability Company), Norcross 30071 (US)
(72) Inventor: Nicholson, Jeffrey W., Warren, NJ 07059 (US); Rosales-Garcia, Andrea, New York, NY 10027 (US); Ramakrishna, Supradeepa V.S., Piscataway, NJ 08854 (US)
(74) Representative: Zimmermann, Tankred Klaus

(57) **Abstract**

A technique is described for eliminating feedback light in a high-power optical device. An optical device is provided that generates, along an optical pathway, an output light at a desired signal wavelength, wherein the generation of the output light at the signal wavelength results in the generation of a feedback light at an undesired feedback wavelength. A port is provided at a selected location along the optical fiber pathway. The port is terminated with a length of a filter fiber, wherein the filter fiber has loss characteristics at the feedback wavelength that result in the elimination of feedback light from the optical fiber pathway through the port.

## Description

### BACKGROUND OF THE INVENTION

### Field of the Invention

The present invention relates generally to the field of fiber optical communications, and in particular to systems and techniques for termination of ports in fiber lasers.

### Background Art

As optical networks continue to increase in size and complexity, there is an increasing demand for lasers and amplifiers operating at ever higher powers. One performance limiter is stimulated Raman scattering (SRS). At higher power levels, SRS causes some of the light output to undergo a "Raman shift," resulting in light at an undesirable longer wavelength that co-propagates with light at the desired output signal wavelength. The Raman-shifted light has a gain that increases exponentially as a function of signal power. If left unchecked, SRS can result in significant reduction in efficiency and can have catastrophic consequences for the laser.

The power threshold at which SRS becomes an issue is relatively high. In a laser or amplifier in which the Raman gain combined with the rare earth gain is on the order of 62-72 dB, the power level of the Raman-shifted wave is typically less than 1 W. In such a device, Raman gain can be controlled, for example, by proper choice of fiber diameter and length.

At higher powers, stimulated Raman scattering becomes increasingly significant. As the amount of Raman gain increases, feedback of the Raman-shifted light by the resonant cavity of a laser or amplifier results in increased SRS and enhanced growth of the Raman wave, with an increasing loss of efficiency. In addition, the resonant cavity in a laser or amplifier can cause feedback of Raman-shifted light within the device, resulting in damage to system components.

In order to develop lasers and amplifiers having power levels significantly exceed those of present designs, it is necessary to find satisfactory ways to address the issue of Raman feedback.

### SUMMARY OF INVENTION

An aspect of the invention provides a method for eliminating feedback light in a high-power optical device. An optical device is provided that generates, along an optical pathway, an output light at a desired signal wavelength, wherein the generation of the output light at the signal wavelength results in the generation of a feedback light at an undesired feedback wavelength. A port is provided at a selected location along the optical fiber pathway. The port is terminated with a length of a filter fiber, wherein the filter fiber has loss characteristics at the feedback wavelength that result in the elimination of feedback light from the optical fiber pathway through the port.

According to further aspects of the invention, a filter fiber is used to perform a number of different functions, including: termination of other optical components; prevention of destabilization of laser cavity from backward Raman light; safe dissipation of signal light; use of filter fiber for all terminations in an optical device; isolation of a visible light source; as well as other contexts.

### BRIEF DESCRIPTION OF THE DRAWINGS

FIG. 1 shows a schematic representation of a high-power cladding-pumped fiber laser according to the prior art.
FIG. 2 shows a cross section diagram of an exemplary backward port of the fiber laser shown in FIG. 1.
FIG. 3 shows an exemplary fiber laser according to an aspect of the invention, in which a filter fiber is used to terminate a backward port.
FIGS. 4 and 5 show, respectively, cross section and isometric views of an exemplary filter fiber suitable for use in conjunction with various described practices of the present invention.
FIGS. 6A-6D show exemplary refractive index profiles for the filter fiber illustrated in FIGS. 4 and 5.
FIG. 7 shows a graph illustrating the relationship between attenuation and wavelength in a filter fiber design of the type illustrated in FIGS. 4 and 5.
FIG. 8 shows an optical spectrum of an experimental confirmation of an aspect of the present invention.
FIG. 9 shows an exemplary fiber laser according to a further aspect of the invention, in which a filter fiber is used to terminate additional ports in a fiber laser or like device.
FIG. 10 shows a schematic of a fiber laser system according to an aspect of the invention, in which a filter fiber is used to protect a visible light source from back-reflected infrared laser light.

### DETAILED DESCRIPTION

The present invention is directed to systems and techniques in which a filter fiber is connected into a fiber laser, amplifier, or similar device, in order to eliminate an undesirable wavelength component from a transmission pathway within the device. According to a first aspect of the invention, a filter fiber is used in a high-power fiber laser or amplifier to eliminate light having a Raman-shifted wavelength. Further aspects of the invention are directed to other advantageous uses of a filter fiber in a fiber laser or amplifier.

The description of the invention is organized into the following sections:
A. Backward Port Termination
B. Termination of Other Optical Components
C. Prevention of Destabilization of Laser Cavity from Backward Raman Light
D. Safe Dissipation of Signal Light
E. Use of Filter Fiber for All Terminations in an Optical Device
F. Isolation of Visible Light Source
G. Other Contexts

### A. Backward Port Termination

As mentioned above, in a fiber laser or amplifier, Raman feedback is a significant factor in limiting the maximum power capacity of a fiber laser, or like device. In particular, Raman feedback from the device's resonant cavity must be taken into consideration. A way must be found to ensure that the feedback of the Raman-shifted wave is maintained at a low level (i.e., < 1 W). Otherwise, feedback may produce enhanced growth of the Raman wave, resulting in reduced performance and possible damage to system components.

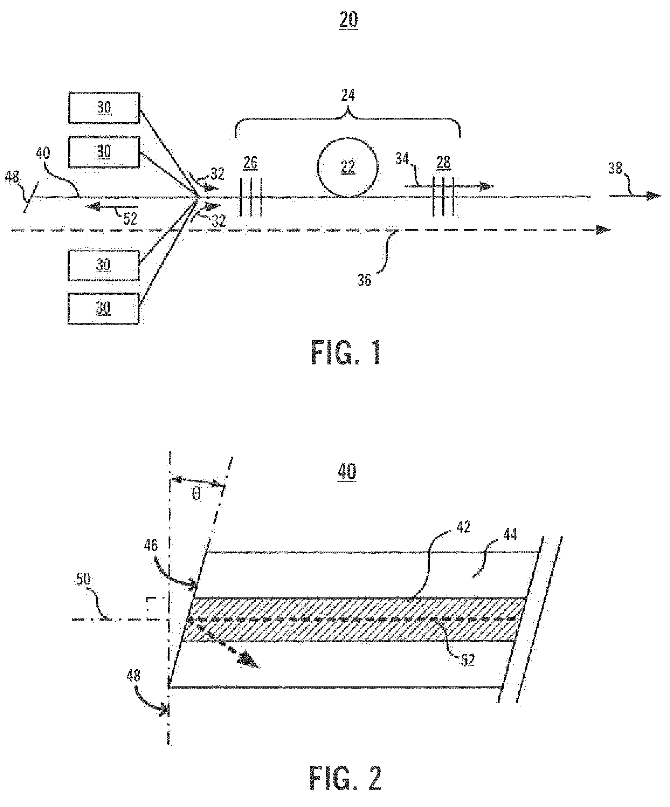

FIG. 1 shows a schematic representation of an exemplary high-power cladding-pumped fiber laser 20 according to the prior art. Laser 20 comprises a segment of an active gain fiber 22, in which a linear resonant cavity 24 formed by a pair of in-fiber gratings that provide a high reflector (HR) 26 and an output coupler (OC) 28. A plurality of pump light sources 30 provide a pump light 32 that is fed into the resonant cavity 24 through the high reflector 26. Ionic gain within the resonant cavity 24 results in the generation of laser light 34 at a desired signal wavelength along a transmission pathway 36 extending through the device. The laser light 34 exits the resonant cavity 24 through output coupler 28, which has relatively low reflectivity. The laser light 34 is then provided as the laser output 38. Laser 20 further comprises one or more backward ports 40.

FIG. 2 shows a cross section diagram of an exemplary backward port 40, which comprises a segment of an optical fiber with a core 42 and surrounding cladding 44. Backward port 40 is terminated using a cleave 46 having an angle θ of approximately 12 degrees relative to a plane 48 perpendicular to the fiber axis 50. Backward-propagating feedback light 52 that enters backward port 40 propagates to cleave 46 and is reflected back into the backward port 40 at an angle θ that causes the feedback light 52 to be reflected into cladding 44 where it is dissipated or absorbed.

At lower power levels, angled cleaves, such as cleave 46 illustrated in FIG. 2, are capable of providing the 62 dB to 72 dB isolation required to prevent enhancement of the Raman-sifted feedback light 52. In a high-power laser, Raman gain can reach power levels at which a significant portion of the Raman-shifted light is reflected back into the laser 20. Thus, the cleave 46 can itself become a primary source of undesirable feedback. Other contributing factors include surface roughness at the cleaved endface and possible degradation due to environmental factors. A similar situation presents itself in a counter-pumped architecture.

Thus, at higher power levels, in order to prevent undesirable enhancement of the Raman component of the generated light, feedback isolation needs to be significantly better than that required for a low-power laser. An improved termination technique is necessary for reducing excess growth of Raman light.

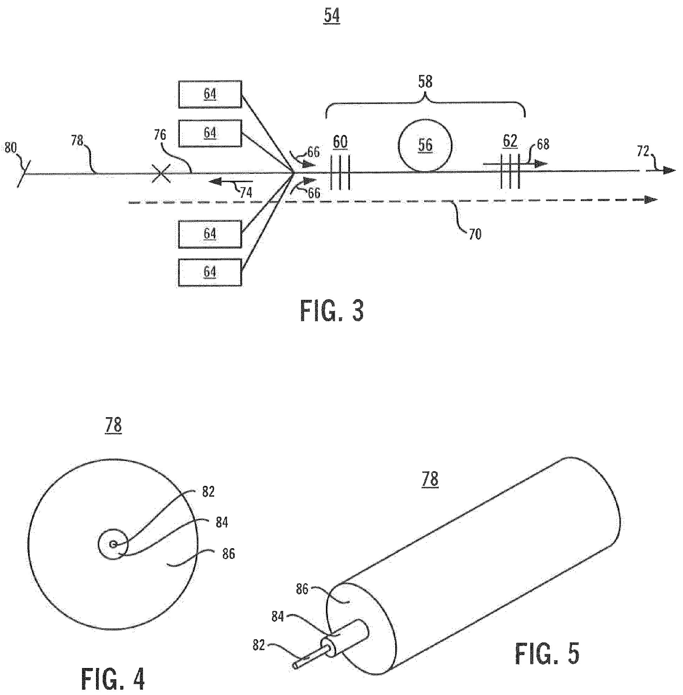

FIG. 3 shows an exemplary fiber laser 54 according to a practice of the invention. Laser 54 comprises a segment of an active gain fiber 56, in which a linear resonant cavity 58 formed by a pair of in-fiber gratings that provide a high reflector (HR) 60 and an output coupler (OC) 62. A plurality of pump light sources 64 provide a pump light 66 that is fed into the resonant cavity 58 through the high reflector 60. Ionic gain within the resonant cavity 58 results in the generation of laser light 68 at a desired signal wavelength along a transmission pathway 70 extending through the device. The laser light 68 exits the resonant cavity 58 through output coupler 62, which has relatively low reflectivity. The laser light 68 is then provided as the laser output 72.

As discussed above, at high powers, some of the laser light 68 generated along the transmission pathway 72 undergoes stimulated Raman scattering, resulting in the generation of a feedback laser light 74 at a Raman-shifted wavelength that is longer than the selected signal wavelength. If the feedback of the Raman-shifted light reaches too high a level, it can have a deleterious effect.

According to an aspect of the invention, the Raman-shifted light is eliminated from the transmission pathway by providing a backward port 76 at a selected location on the transmission pathway. Backward port 76 comprises an optical fiber segment that is terminated with a segment of a filter fiber 78 having a cleaved endface 80 that is suitably angled (e.g., at approximately 12 degrees).

The filter fiber 78 is configured to have low loss at the signal wavelength and enhanced loss at undesirable wavelengths, i.e., at one or more wavelengths at which Raman feedback occurs. A suitable filtering effect for filter fiber 78 can be achieved using techniques known in the art, e.g., through the use of a fiber with a tailored fiber index profile, through the application of photonic bandgap concepts, or the like.

Backward port 76 and filter fiber 78 comprise respective cores that are spliced to each other. The core of filter fiber 78 is fabricated from a material that is chosen to provide good index matching upon splicing with the core material of the backward port 76, thereby eliminating Fresnel reflections. The filtering effect provided by the filter fiber 78 then causes at least some of the Raman component to be lost through dissipation or absorption.

Filter fiber 78 can be tailored to provide a relatively small amount of Raman loss or alternatively can be tailored to provide a larger amount of Raman loss, e.g., in the tens of decibels. With sufficient length, a suitably configured filter fiber can fully eliminate the Raman component in a given fiber laser. According to a further aspect of the invention, a filter fiber is also used to remove any influence of the cleaved endface 80.

With respect to light at the signal wavelength, the loss characteristics of filter fiber 78 can be configured according to the needs of a given application. For example, the amount of signal component loss can be modified (i.e., from very low loss to high loss) by modifying the coiling conditions. For applications where the signal component is used to provide a monitoring port output, the signal component can be left largely unaffected. This approach was demonstrated in a forward-pumped oscillator with an 11 µm core. The oscillator was pumped with 450W, yielding 330 W of signal power.

Suitable filter fiber designs are described, for example, in U.S. Pat. No. 8,428,409, which is owned by the assignee of the present invention, and which is incorporated by reference herein in its entirety.

FIGS. 4 and 5 show, respectively, cross section and isometric views of an exemplary filter fiber 78 according to U.S. Pat. No. 8,428,409, comprising a raised-index core 82, a depressed-index inner cladding 84, and an undoped outer cladding 86.

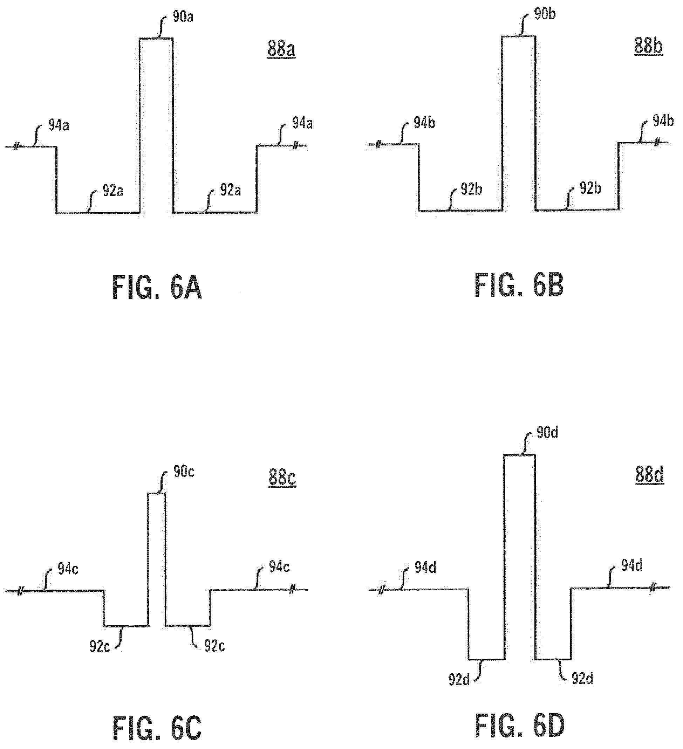

FIGS. 6A-6D show exemplary refractive index profiles 88a-d for the filter fiber illustrated in FIGS. 4 and 5. In each refractive index profile 88a-d, the central spike 90a-d corresponds to the filter fiber's raised-index core 82, the trench regions 92a-d correspond to the filter fiber's depressed-index inner cladding 84, and the flat outer regions 94a-d correspond to the filter fiber's undoped outer cladding 86.

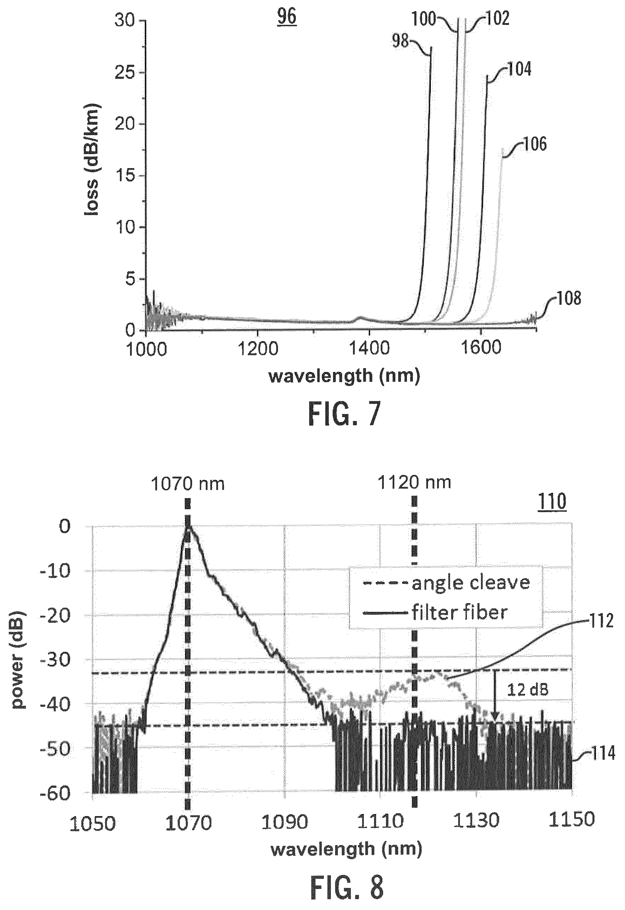

FIG. 7 shows a graph 96 illustrating the relationship between attenuation and wavelength in a prototype filter fiber design according to U.S. Pat. No. 8,428,409. Experimental data was generated for a number of different outer cladding diameters: 122 µm (curve 98); 123 µm (curve 100); 124 µm (curve 102); 125 µm (curve 104); 132 µm (curve 106) and 142 µm (curve 108). Since these fibers were drawn from the same preform, their core diameters are proportional to the cladding diameters, and for example, the core diameter in the 142 µm clad diameter fiber is about 16.7% larger than that in the 122 µm clad diameter fiber. Curves 98-108 illustrate the described filtering effect: there is a 10⁶ order of magnitude difference in attenuation between wavelengths below a specified cutoff wavelength and wavelengths about the cutoff wavelength.

Aspects of the present invention were confirmed experimentally by analyzing the spectral output of two configurations of a fiber laser having a desired output wavelength of 1070 nm, and an undesired Raman-shifted wavelength of 1120 nm. In a first configuration, the fiber laser was configured as shown in FIG. 1, with an angle-cleave-only termination of the backward port 40. In a second configuration, the fiber laser was configured as shown in FIG. 3. The backward port 76 was terminated with a 3-meter length of a filter fiber 78 having an angled, cleaved endface 80, as described above. The filter fiber 78 had a cutoff wavelength of 1100 nm.

FIG. 8 shows an optical spectrum 110 of the respective outputs of the first and second configurations. Trace 112 shows the output spectrum for the first configuration, which shows a primary peak at the 1070 nm signal component and a secondary peak at 1120 nm, approximately 34 dB below the primary peak. Trace 114 shows the output spectrum for the second configuration, which shows the effective suppression of the secondary peak at 1120 nm, compared with an angle-cleave-only termination.

### B. Termination of Other Optical Components

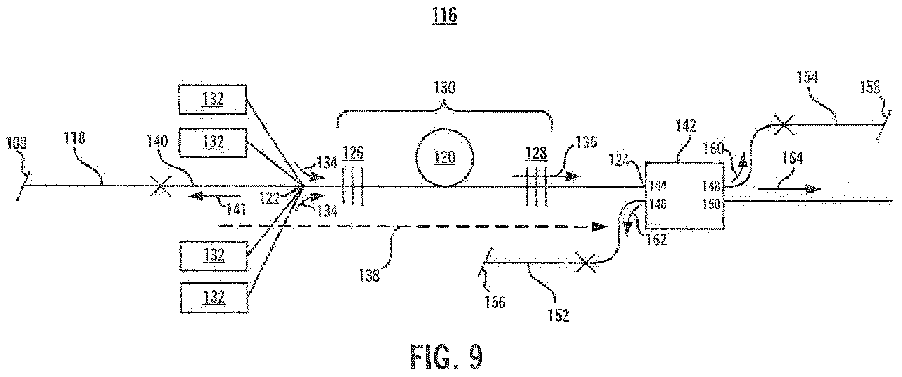

FIG. 9 shows an exemplary fiber laser 116 according to a further aspect of the invention, in which a filter fiber 118 is used to terminate additional ports in a fiber laser or like device.

Laser 116 comprises an active fiber 120 having an input end 122 and an output end 124; a high reflector grating (HC) 126 and an output coupler (OC) 128 that, together with the segment of active fiber 120 between them, form a resonant cavity 130; and a plurality of laser diodes 132 that provide a pump light input 134 into the resonant cavity 130, resulting in the generation of a laser light 136 along transmission pathway 138.

In accordance with FIG. 3 and the accompanying written description, laser 116 further includes a backward port 140, to which filter fiber 118 is connected. Filter fiber 118 is terminated at an angled cleave 138 and, as described above, is used to eliminate feedback light 141 at a Raman-shifted wavelength entering the first backward port 140.

Laser 116 further includes a 2x2 component 140 having first and second backward ports 142, 144 and first and second forward ports 146, 148. The lead end of the active fiber 120 is connected to the 2x2 component's first backward port 144. The 2x2 component's second backward port 146 and first forward port 148 are each connected to a respective length of filter fiber 152, 154, each of which is terminated at a respective angled cleave 156, 158. Filter fibers 152, 154 eliminate light at a Raman-shifted wavelength traveling in both a forward direction 160 and backward direction 162. The filtered laser light is provided as an output 164 at the 2x2 component's second forward port 150.

### C. Prevention of Destabilization of Laser Cavity from Backward Raman Light

According to another aspect of the invention, a filter fiber with low loss at a signal wavelength is used in between a laser cavity and a delivery fiber to prevent destabilization of the cavity from backward Raman light potentially generated in the delivery fiber, which can have a significant length (i.e., in the tens of meters).

### D. Safe Dissipation of Signal Light

According to a further aspect of the invention, a filter fiber is used in a high-power optical device to provide a termination that strongly suppresses an undesirable Raman wavelength component, as described above, and in addition dissipates signal power, ranging from 10s to 100s of watts, in a safe way.

In a high-power optical device, attenuation mechanisms that introduce a constant high loss to each wavelength create thermal issues and the possibility of damage because of localized heating from the high levels of signal power involved. A filter-fiber-based termination automatically solves this issue. Beyond a cutoff wavelength, loss in a filter fiber increases with wavelength. By proper choice of the cutoff wavelength, loss at the signal wavelength can be configured to be moderate (e.g., ~15 dB/m), allowing for gradual dissipation of backward signal light along the fiber length. The loss at the Raman component can be configured to be very high, which provides a high degree of feedback suppression.

### E. Use of Filter Fiber for All Terminations in an Optical Device

According to a further aspect of the invention, the use of suitably configured filter fibers is generalized to provide all terminations in an optical device. A Raman filter fiber is connected into the main optical path, and is further used to isolate the laser cavity from all external sources of light at one or more undesirable Raman wavelengths.

### F. Isolation of Visible Light Source

In some laser systems, the output includes light at both infrared and visible wavelengths. The visible light component allows the direction of an infrared laser beam to a specific target without the need for special infrared viewers. According to an aspect of the invention, a filter fiber is connected between a low-power visible light source and the laser's resonant cavity in order to protect the visible light source from back-reflected infrared laser light impinging onto its surface.

In a typical prior art system, a visible light source is connected to a laser cavity by means of a wavelength combiner, such as a wavelength division multiplexer (WDM) or like device. The extinction ratio of typical wavelength combiners is, in general, insufficient to completely isolate the visible light source. Feedback of high-power infrared laser light through the wavelength combiner may result in damage to the visible light source. Thus, prior-art systems typically employ additional isolators, cascaded wavelength multiplexers, attenuators, and the like in order to protect and isolate the visible source.

As described below, the use of a filter fiber to isolate the low-power visible light source eliminates the need for additional components.

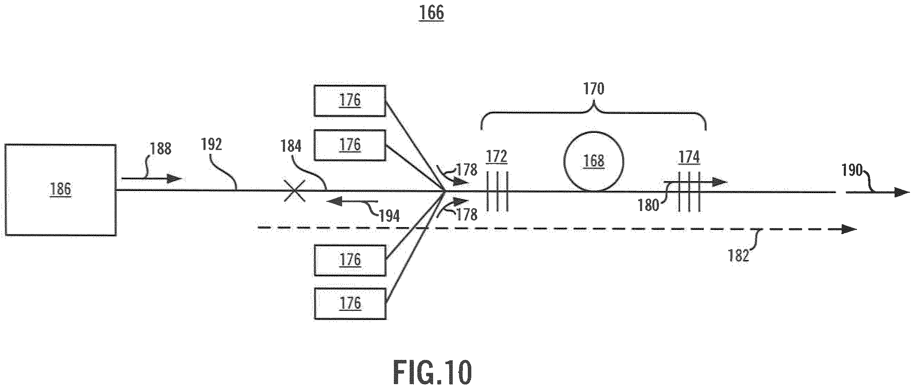

FIG. 10 shows a schematic of a fiber laser system 166 according to this aspect of the invention. Laser system 166 comprises a segment of an active gain fiber 168 having a linear resonant cavity 170 formed by a pair of gratings: a high reflector (HR) grating 172 and an output coupler (OC) grating 174. A plurality of pump sources 176 provides a pump light input 178 that is fed into the resonant cavity 170 through the high reflector grating 172, resulting in the generation of an infrared laser light 180 along transmission pathway 182 that exits the resonant cavity 170 through the output coupler grating 174.

Laser system 166 further includes a backward port 184, to which is connected a visible light source 186 for launching a visible light 188 into the transmission pathway 182. The output 190 of laser system 166 includes both the infrared laser light 180 and the visible light 188.

Visible light source 186 is connected to the backward port 184 by means of a filter fiber 192. The filter fiber 192 transmits visible light 188 from the visible light source 186 into the transmission pathway 182, while suppressing undesired infrared light 194 reflected from the resonant cavity 170 back towards the visible light source 186.

Laser system 166 is suitable for use, for example, in an application in which signal monitoring capabilities are not required in the backward port 184 of the laser's resonant cavity 170.

### G. Other Contexts

It is noted that in the present discussion, aspects of the invention are described in the context of undesirable light arising from Raman scattering. It will be appreciated that the termination ideas discussed are generally applicable in a number of different contexts. For example, a suitably configured filter fiber can be utilized to eliminate feedback from other undesirable wavelengths as well. For example, the techniques described herein can be used to reduce, or eliminate, feedback arising from amplified spontaneous emission noise (ASE).

### Conclusion

While the foregoing description includes details that will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto and that the claims be interpreted as broadly as permitted by the prior art.

## Claims

1. A method for eliminating feedback light in an optical device, comprising:
(a) providing an optical device for generating, along an optical pathway, an output light at a desired signal wavelength, wherein the generation of the output light at the signal wavelength results in the generation of a feedback light at an undesired feedback wavelength;
(b) providing a port at a selected location along the optical fiber pathway; and
(c) terminating the port with a length of a filter fiber,
wherein the filter fiber has loss characteristics at the feedback wavelength that result in the elimination of feedback light from the optical fiber pathway through the port; and
wherein the filter fiber has loss characteristics at the signal wavelength that result in maintenance of signal light along the optical fiber pathway.

2. The method of claim 1,
wherein the filter fiber and port have respective cores that are index-matched with respect to each other so as to eliminate Fresnel reflections.

3. The method of claim 2, wherein the filter fiber includes an angle-cleaved endface.

4. The method of claim 2,
wherein in step (b), the port is configured as a backward port for elimination of backward-reflected feedback light.

5. The method of claim 4, wherein light at the primary wavelength is preserved without loss.

6. The method of claim 5, wherein backward-propagating light at the signal wavelength is dissipated gradually through the port at a rate slower than that of the elimination of light at the feedback wavelength.

7. The method of claim 1,
wherein the optical device is a fiber laser, and
wherein the feedback wavelength corresponds to a Raman component of light generated by the fiber laser,
such that the Raman component is eliminated from light propagating through the optical device that reaches the port.

8. The method of claim 7, wherein the filter fiber is connected into the main optical path of the fiber laser.

9. The method of claim 8, wherein the filter fiber is configured to isolate the laser cavity from external sources of light at a Raman wavelength.

10. The method of claim 1, wherein the optical device is a fiber laser and wherein the filter fiber is configured to eliminate feedback for amplified spontaneous emission noise.

11. A method for eliminating feedback light in an optical device, comprising:
(a) providing an optical device for generating, along an optical pathway an output light at a desired signal wavelength, wherein the generation of the output light at the signal wavelength results in the generation of a feedback light at one or more undesired feedback wavelengths;
(b) providing a plurality of ports at a selected location along the optical fiber pathway;
(c) terminating each port with a respective length of filter fiber, each of which is configured to have loss characteristics at a feedback wavelength that results in the elimination of feedback light from the optical fiber pathway through the port; and
such that light at the respective feedback wavelengths is eliminated when light propagating through the optical device reaches each respective port.

12. A method for co-propagation of a visible light source in a laser cavity, comprising:
(a) providing an optical device for generating, along an optical pathway including a laser cavity, an output light at a non-visible wavelength;
(b) providing a filter fiber; and
(c) using the filter fiber to connect a visible light source into the optical pathway,
wherein the filter fiber has loss characteristics that result in elimination of generated non-visible light traveling through the filter fiber towards the visible light source before it reaches the visible light source.

13. A method for isolating a fiber laser from a delivery stage, comprising:
(a) providing a length of a filter fiber that is configured to have low loss at a signal wavelength and enhanced loss at an undesirable wavelength; and
(b) using the filter fiber to connect a fiber laser to a delivery stage,
such that light at the undesirable wavelength propagating between the fiber laser and the delivery stage is eliminated, while preserving light at the signal wavelength.

14. A method for eliminating feedback of light at an undesirable wavelength in an optical device, comprising:
(a) providing a length of an optical fiber (does not need to be coreless, any optical fiber will do, a coreless fiber indexed matched to the port with a dissipative cladding would be a specific implementation) that is configured to have enhanced loss at an undesirable feedback wavelength, and
(b) connecting the coreless optical fiber (does not need to be coreless, any optical fiber will do) to a port at a selected location in the optical device, wherein the coreless optical fiber has an index that is matched to that of the port,
such that light at the feedback wavelength is eliminated when light propagating through the optical device reaches the port.

15. The method of claim 14,
wherein in step (b), the port is configured as a backward port for elimination of backward-reflected light at the feedback wavelength.
